## Europäisches Patentamt
## European Patent Office
## Office européen des brevets

(19)

(11) Veröffentlichungsnummer: **0 125 452**
**B1**

(12)                    **EUROPÄISCHE PATENTSCHRIFT**

(45) Veröffentlichungstag der Patentschrift:
**07.01.87**

(51) Int. Cl.⁴: **F 16 D  1/08,** F 16 C  13/00,
B 21 B  27/02

(21) Anmeldenummer: **84103615.5**

(22) Anmeldetag: **02.04.84**

(54) **Anordnung zum Befestigen eines Walzenrings auf einer fliegend gelagerten Walzenwelle.**

(30) Priorität: **04.05.83  DE 3316289**

(43) Veröffentlichungstag der Anmeldung:
**21.11.84 Patentblatt 84/47**

(45) Bekanntmachung des Hinweises auf die Patenterteilung:
**07.01.87 Patentblatt 87/2**

(84) Benannte Vertragsstaaten:
**AT BE CH DE FR GB IT LI LU NL SE**

(56) Entgegenhaltungen:
**DE - A - 1 804 857**
**DE - A - 2 144 711**
**DE - A - 2 449 562**
**DE - A - 2 549 709**
**DE - A - 3 143 878**
**DE - B - 2 606 908**
**FR - A - 2 083 867**
**FR - A - 2 384 593**
**US - A - 2 574 773**

(73) Patentinhaber: **Kark, Uwe, Cuxhavener Strasse 60a,
D-2104 Hamburg 92 (DE)**

(72) Erfinder: **Kark, Uwe, Cuxhavener Strasse 60a,
D-2104 Hamburg 92 (DE)**

(74) Vertreter: **Glawe, Delfs, Moll & Partner Patentanwälte,
Postfach 26 01 62 Liebherrstrasse 20,
D-8000 München 26 (DE)**

**Beschreibung**

Die Erfindung bezieht sich auf eine Anordnung zum Befestigen eines Walzenrings auf einer fliegend gelagerten Walzenwelle mittels einer im wesentlichen das gesamte Drehmoment übertragenden Konushülse, die von einer Feder axial belastet ist, die sich an einem Widerlager abstützt.

Bei einer bekannten Anordnung dieser Art (US-A-2 574 773) wird die Konushülse durch Tellerfedern, die ihrerseits durch eine am Ende der Walzenwelle angeordnete Schraube abgestützt sind, zwischen eine konische Fläche der Walzenwelle und eine gegensinnig konische Bohrung des Walzenrings eingepresst. Die Federkraft und die Konuswinkel sind so bemessen, dass die Konushülse das Antriebsdrehmoment von der Walzenwelle auf den Walzenring praktisch alleine zu übertragen in der Lage ist. Dabei ist der Konuswinkel in der Bohrung der Konushülse und in dem damit zusammenwirkenden Teil der Walzenwelle so gross gewählt, dass Selbsthemmung nicht eintritt; daher kann die Konushülse den von Temperaturänderungen bedingten Durchmesseränderungen des Walzenrings durch axiale Verschiebung nachgeben. Beim Wechsel des Walzenrings ist es notwendig, die Feder und die Konushülse von der Walzenwelle zu entfernen, bevor der Walzenring abgezogen werden kann. Dies ist umständlich und kann in der Praxis auf Schwierigkeiten stossen.

Bekannt ist es ferner (DE-A-3 143 878; FR-A-2 384 593), die drehmomentübertragende Verbindung zwischen der Walzenwelle und dem Walzenring durch axiale Einspannung des Walzenrings zu erzielen, während die radial zwischen Walzenwelle und Walzenring vorgesehene Konushülse lediglich zur Zentrierung dient. Dadurch sollen in denjenigen Fällen, in denen der Walzenring aus zugspannungsempfindlichem Werkstoff (beispielsweise Hartmetall) besteht, die als nachteilig empfundenen hohen Zugspannungen vermieden werden, die mit der ausschliesslichen Drehmomentübertragung über eine Konushülse verbunden sind. Für die Ausübung der axialen Pressung auf den Walzenring ist eine starke Feder vorgesehen, während für die axiale Beaufschlagung der Konushülse eine relativ schwache Feder dient. Beide Federn werden von derselben, auf dem freien Ende der Walzenwelle verschraubbaren Mutter abgestützt. Zum Spannen der Federn ist eine hydraulische Kolben-Zylinder-Einrichtung vorgesehen. — Diese Anordnungen haben zum einen den Nachteil, dass die axiale Einspannung des Walzenrings nicht zur Übernahme der radialen Walzkräfte ausreicht; diese müssen über die Konushülse aufgenommen werden, was zur Folge hat, dass diese — unabhängig von der Übertragung des Antriebsmoments — doch sehr stark angezogen werden muss, wenn starkes Wandern des Walzenrings in Umfangsrichtung unter dem Einfluss der Walzkräfte vermieden werden soll. Dann sind aber auch starke Umfangsspannungen des Walzenrings unvermeidlich, zumal die Konushülsen bei den bekannten Konstruktionen einen kleinen, unter der Selbsthemmungsgrenze liegenden Konuswinkel haben, so dass sie sich nach einem durch eine Dehnung des Walzrings ermöglichten Vorschub nicht selbsttätig zum Ausgleich der Spannung zurückstellen können. — Nachteilig ist schliesslich, dass bei einem Walzenringwechsel die gesamte aus Federn, Sicherungsmutter und hydraulischen Einrichtungen bestehende Anordnung zuvor abgenommen werden muss, dass keine hydraulische Einrichtung zur Erleichterung des Abzugs dieser Teile vorgesehen ist bzw. dass eine solche Einrichtung von aussen gesondert angesetzt werden muss, und dass die Federn und deren gegenüber Verschmutzung und Korrosion im Hinblick auf eine gleichmässige Kraftübertragung empfindlichen Pressflächen der Verschmutzung und Korrosion durch Betriebseinflüsse ungeschützt ausgesetzt sind. Der Walzenringwechsel gestaltet sich nicht nur umständlich, sondern er setzt auch besondere Fachkunde vom Personal und pflegliche Behandlung der zu der Befestigungsanordnung gehörenden Teile voraus.

Der Erfindung liegt die Aufgabe zugrunde, eine Befestigungsanordnung der eingangs genannten Art zu schaffen, die bei geringem Bauaufwand und Platzbedarf eine sichere und schonende Befestigung des Walzenrings und einen raschen und einfachen Walzenringwechsel ermöglicht, ohne an die Qualifikation des Personals und an die Wartung der Befestigungsanordnung besondere Anforderungen zu stellen.

Die erfindungsgemässe Lösung besteht in der Kombination der folgenden Merkmale:

a) radial innerhalb der Feder ist ein Zylinderteil angeordnet, der mit der Walzenwelle zwei axial gegensinnig wirkende Ringzylinderräume mit gesonderten Hydraulikanschlüssen bildet;

b) der Zylinderteil weist einen axial zwischen der Feder und dem Schraubelement angeordneten Flansch auf;

c) eine zum freien Ende der Walzenwelle weisende Anschlagfläche ist mit dem Zylinderteil und eine damit zusammenwirkende gegensinnige Anschlagfläche ist mit der Konushülse verbunden.

Da die hydraulischen Einrichtungen sowohl für das Vorspannen der Feder als auch für das Lösen der Konushülse innerhalb der Anordnung bleibend vorhanden sind, genügt es für ihre Benutzung, wenn die hydraulischen Anschlüsse mit einer entsprechenden Druckmediumquelle verbunden werden. Dies ist rasch möglich und setzt keine besondere Fachkunde voraus. Obwohl die hydraulischen Einrichtungen bleibend in der Vorrichtung enthalten sind, ist ihr Platzbedarf vergleichsweise gering, weil sie grossenteils radial innerhalb des Federbereichs angeordnet sind und insoweit den für die Feder ohnehin erforderlichen axialen Raum nutzen. Dabei ist der Bauaufwand vergleichsweise gering, weil die Oberfläche der ohnehin vorhandenen Walzenwelle zur Bildung der Zylinderräume herangezogen wird. Zwar ist es an sich bekannt (DE-A-2 144 711), bei einer Walzenwelle eine in zwei entgegengesetzten Richtungen wirksame, zwei Ringzylinder umfassende hydraulische Anordnung am Walzenwellenende vorzusehen; jedoch dient diese zum Montieren und Abziehen einer Lageranordnung, wobei die hydraulische Einrichtung beim Montagevorgang auf eine innere Lagerschale wirkt, die mit konischer Bohrung auf einem entsprechenden konischen Wellenabschnitt der Welle sitzt, und bei der Demontage auf eine äussere Lagerschale wirkt, die über Flanschvorsprünge mit der inneren Lagerschale axial zusammenwirkt, um sie bei der Demontagebewegung mitzunehmen. Da die konstruktiven Voraussetzungen im Zusammenhang eines Lagers wesentlich anders sind als bei der Befestigung eines Walzenrings, konnte durch die bekannte Anordnung keine unmittelbare Lehre für die Ausbildung einer hydraulischen Einrichtung im Zusammenhang mit einer Befestigungsanordnung für einen Walzenring gegeben werden.

Zweckmässigerweise sind die grössten Aussendurchmesser der Konushülse, der Feder und des Zylinderteils, soweit diese auf der freien Seite des Walzenrings liegen, nicht grösser als der kleinste Innendurchmesser des Walzenrings. Dies ermöglicht eine Montage und Demontage des Walzenrings ohne Entfernung der genannten Teile. Dies bedeutet nicht nur eine starke Vereinfachung des Walzenringwechsels, sondern trägt auch zur Schonung der empfindlichen Teile der Hydraulik und der Federanordnung und damit zu der Verlängerung von deren Lebensdauer und einwandfreier Funktion zugunsten der Lebensdauer der Walzenringe bei.

Vorzugsweise weist der Zylinderteil zwei koaxiale Bohrungen auf, von denen die grössere einen auf der Walzenwelle fest angeordneten Ringkolben dicht einschliesst, während die kleinere auf der der Feder zugewandten Seite des Ringkolbens gegenüber der Walzenwelle abgedichtet ist, wobei eine auf dem freien Ende der Walzenwelle bzw. auf dem Ringkolben verschraubbare Mutter als Widerlager zum Fixieren des Zylinderteils in dessen Spannstellung vorgesehen ist. In diesem Zusammenhang weist der Zylinderteil zweckmässigerweise auf der dem Ringkolben abgewandten Seite seiner kleineren Bohrung eine weitere, gegenüber einem verdickten Teil der Walzenwelle abgedichtete Bohrung zur Bildung des zweiten Ringzylinderraums auf.

Nach einem weiteren Merkmal der Erfindung kann vorgesehen sein, dass die die Feder einschliessenden Teile der Konushülse und des Zylinderteils von einer sie vor Verschmutzung schützenden Manschette umgeben sind, deren Durchmesser geringer ist als der Innendurchmesseer des Walzenrings. Stattdessen oder zusätzlich kann die Feder, mit dem daran angrenzenden Teil der Konushülse und des Zylinderteils von einer Schutzhülse umgeben sein, die am Walzenring abgedichtet ist und vorzugsweise mit dem als Mutter ausgebildeten Widerlager verbunden ist.

Voraussetzung für einen kleinen Durchmesser der Befestigungsanordnung für eine bequeme Montage und Demontage des Walzenrings ist der Verzicht auf eine axiale Einspannung des Walzenrings und der Rückgriff auf die eingangs genannte bekannte Befestigungsanordnung, bei welcher der Walzenring ausschliesslich durch die Konushülse und deren radiale Spannung an der Walzenwelle gehalten ist. Die damit verbundene hohe Beanspruchung des Walzenrings verlangt bei Verwendung von zugspannungsempfindlichem Material für den Walzenring nach sorgfältiger Vermeidung der Spannungsspitzen, die durch Herstellungstoleranzen oder durch Kontraktion des Walzenrings nach Erwärmung verursacht werden können. Zu diesem Zweck kann es geboten sein, einen Hülsenkonuswinkel oberhalb der Selbsthemmungsgrenze zu wählen, wie dies bei der eingangs erläuterten Anordnung bekannt ist. Die spannungsbegrenzende Wirkung dieser Massnahme beruht darauf, dass die Konushülse durch Axialbewegung den temperaturbedingten Dehnungsverhältnissen am Walzenring nachzugeben vermag. Da solche Bewegungen aber wegen ihrer Verschleisswirkungen tunlichst vermieden werden sollten, kann es im Zusammenhang mit der Erfindung zweckmässig sein, dass die Konushülse radial federnd ausgebildet ist (an sich bekannt aus der DE-C-2 606 908) und dass die bei den temperaturbedingt zu erwartenden axialen Dehnungsunterschieden auftretende Federkraftdifferenz kleiner ist als die Reibkräfte zwischen der Konushülse und der Walzenwelle. In dieser Merkmalskombination sorgt die Bemessung des Hülsenkonuswinkels oberhalb der Selbsthemmungsgrenze zusammen mit geeigneter Federspannung dafür, dass einerseits die Mindestgrenze für die radiale Spannung des Walzenrings, die für dessen Befestigung erforderlich ist, niemals unterschritten wird und andererseits auch bei Kontraktion des Walzenrings nach Erwärmung keine gefährlichen Spannungsspitzen erreicht werden können. Wäre die Hülse in diesem Zusammenhang radial starr, so müsste mit ständigen axialen Ausgleichsbewegungen der Konushülse und entsprechendem Verschleiss der aufeinander gleitenden, hochbeanspruchten Flächen gerechnet werden, jedoch verhindert die radiale Nachgiebigkeit der Konushülse den grössten Teil dieser Bewegungen. Schliesslich wäre bei einer zu steilen Federkennlinie aufgrund der unvermeidlichen axialen Dehnungsunterschiede zwischen Walzenwelle und Konushülse und den weiteren die Federkraft übertragenden Teilen mit wechselnder Federspannung und daher auch axialen Bewegungen der Hülse zu rechnen, die dadurch verhindert werden, dass die aufgrund der axialen Dehnungsunterschiede auftretende Federkraftdifferenz kleiner als die Reibkräfte zwischen Konushülse und Walzenwelle bemessen wird. Da sowohl die Reibungskräfte als auch die Federkräfte bei unterschiedlichen Dehnungsverhältnissen leicht berechnet werden können, kann die Auslegung aufgrund der obigen Bemessungsregeln so erfolgen, dass axiale Bewegungen der Konushülse zum Ausgleich radialer oder axialer Dehnungsunterschiede nicht oder äusserst selten auftreten.

Da demnach die am Walzenring angreifenden Befestigungskräfte in engen Grenzen gehalten werden können, hat sich gezeigt, dass Hartmetall-Walzenringe wesentlich sparsamer dimensioniert werden können, als dies bislang üblich ist. Ferner hat sich gezeigt, dass die Lebensdauer der Walzenringe verlängert wird, weil der Verschleiss an ihren Arbeitsflächen herabgesetzt wird, was offenbar darauf zurückgeht, dass die Befestigungsqualität trotz der Beschränkung auf eine ausschliesslich radiale Spannwirkung verbessert ist.

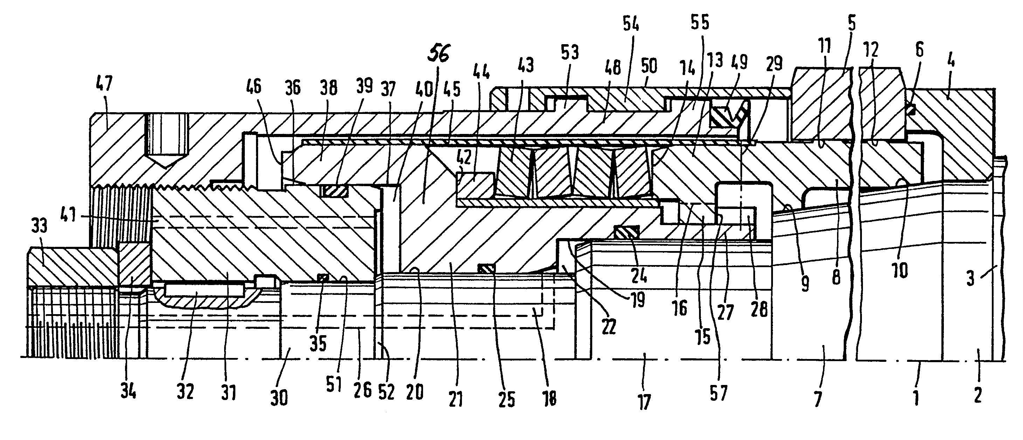

Die Erfindung wird im folgenden näher unter Bezugnahme auf die Zeichnung erläutert, die einen Halbschnitt der Anordnung veranschaulicht.

Die Walzenwelle 1 ist rechts ausserhalb des dargestellten Bereichs in bekannter Weise zur Bildung eines sogenannten Scheibenwalzengerüsts fliegend gelagert. Auf einer zylindrischen Passfläche 2 der Walzenwelle und axial abgestützt durch einen Bund 3 sitzt ein Stützring 4, der den Walzenring 5, der aus sprödem Material wie Hartmetall besteht, axial abstützt und mittels eines Dichtrings 6 abdichtet. An die Passfläche 2 schliesst sich auf der Welle eine Konusfläche 7 an, auf der die Konushülse 8 sitzt. Sie stützt sich auf der Konusfläche 7 über axialen Abstand voneinander aufweisende Ringvorsprünge 9, 10 ab. An ihrer Aussenfläche bildet sie Ringvorsprünge 11, 12, die an der zylindrischen Innenfläche des Walzenrings 5 anliegen. Der Aussendurchmesser der Ringvorsprünge 11, 12 ist so bemessen, dass die Konushülse im entspannten Zustand ein geringes Spiel gegenüber dem Innendurchmesser des Walzenrings aufweist. Die äusseren Ringvorsprünge 11, 12 sind axial versetzt gegenüber den inneren Ringvorsprüngen 9, 10, wodurch die Federwirkung der Konushülse 8 begründet wird.

Die Konushülse weist einen zylindrisch geradlinig geformten Hülsenteil auf, der sich zum freien Ende der Walzenwelle hin ebenso geradlinig und zylindrisch in Gestalt eines Fortsatzes 13 fortsetzt, der eine Stirnfläche 14 sowie einen radial nach innen ragenden Ringvorsprung 15 bildet, dessen Innenumfang einige axial verlaufende Nuten enthält, deren Nutgrund durch gestrichelte Linie bei 16 angedeutet ist. Beispielsweise können zwei Nuten einander diametral gegenüberliegend vorgesehen sein.

An die Konusfläche 7 schliessen sich an der Walzenwelle zwei koaxiale zylindrische, abgestufte Kolbenflächen 17, 18 an, die von dem Zylinderteil 21 umgeben sind, der koaxiale, zylindrische Zylinderbohrungen 19, 20 aufweist, die im Durchmesser den Kolbenflächen 17, 18 entsprechen und mit diesen unter Einschluss von Dichtungen 24, 25 zusammenwirken. Dadurch entsteht ein Ringzylinderraum 22, der eingeschlossen ist von den Flächen 18 und 19 sowie den radial verlaufenden Flächen, die an der Walzenwelle 2 bzw. am Zylinderteil 21 den Übergang zwischen den Kolbenflächen 17, 18 bzw. den Zylinderbohrungsflächen 19, 20 bilden. Durch eine Bohrung 26 in der Walzenwelle kann der Ringzylinderraum 22 mit Hydraulikmedium beaufschlagt werden. Dadurch wird der Zylinderteil 21 nach links gedrängt. Der Zylinderteil 21 weist an seinem in der Zeichnung rechten Ende einen hülsenförmigen Fortsatz 27 auf, der sich durch den radial inneren Vorsprung 15 der Konushülse 8 hindurch erstreckt und am Ende radial nach aussen vorspringende Mitnehmer 28 trägt, die in Form und Anordnung den Nuten 16 entsprechen. Bei der Montage kann daher der hülsenförmige Fortsatz 27 axial durch den inneren Vorsprung 15 der Konushülse hindurchgeschoben werden, wobei die Mitnehmer 28 durch die Nuten 16 hindurchgehen, so dass die Mitnehmer 28 hinter den inneren Vorsprung (rechts in der Zeichnung) greifen. Die beiden Teile werden anschliessend ein wenig gegeneinander verdreht, so dass die Mitnehmer 28 von den Nuten 16 entfernt sind. In dieser gegenseitigen Stellung werden der Zylinder 21 und die Konushülse 8 durch einen durch die strichpunktierte Linie 29 symbolisierten Stift gesichert. Wenn der Ringzylinderraum 22 mit Druckmedium beaufschlagt und der Zylinderteil 21 demzufolge in der Zeichnung nach links verschoben wird, nimmt er über Anschlagflächen 57 die von den Mitnehmern 28 und dem radial inneren Vorsprung 15 gebildete sind, die Konushülse 8 zwecks Demontage mit.

An der Walzenwelle 1 schliesst sich zum freien Ende derselben hin an die Kolbenfläche 18 eine zylindrische Fläche 30 an, auf die die Bohrung 51 eines Ringkolbens 31 aufgepasst ist, der gegen Drehung durch eine Passfeder 32 und gegen axiale Verschiebung durch einen Wellenbund 52 und eine auf dem Ende des Walzenkerns sitzende Mutter 33 über einen Ring 34 gesichert ist. Der Ringkolben 31 ist gegenüber der Fläche 30 durch eine Dichtung 35 abgedichtet und bildet auf seiner Aussenfläche eine Kolbenfläche 36, die mit einer Zylinderbohrung 37 in einem axialen Fortsatz 38 des Zylinderteils 21 abgedichtet mittels Dichtungsring 39 zusammenwirkt. Dadurch wird ein Ringzylinderraum 40 gebildet, der von den Flächen 18 und 37 sowie den zugehörigen Stirnflächen am Ringkolben 31 und am Zylinder 21 umgrenzt ist und der über eine Bohrung 41 mit Druckmedium beaufschlagt werden kann und im Falle der Beaufschlagung den Zylinderteil 21 in der Zeichnung nach rechts schiebt.

Der Zylinderteil 21 weist in axialem Abstand von der Konushülse 8 an einem nach aussen ragenden Flansch 56 eine Stirnfläche 42 auf, die der Stirnfläche 14 der Konushülse 8 axial gegenüberliegt. Zwischen diesen Flächen ist ein Paket von Tellerfedern 43 angeordnet. Zwecks Massanpassung ist ein Zwischenring 44 vorgesehen, dessen axiale Abmessung so gewählt ist, dass bei entspannten Tellerfedern 43 der Zylinderteil mit seinen Mitnehmern 28 mit wenig Spiel hinter den inneren Ringvorsprung 15 der Konushülse greifen kann. Eine Manschette 45 aus gummielastischem Material ist um diese Anordnung herumgespannt und dichtet sie nach aussen hin ab.

An seiner freien Seite bildet der Fortsatz 38 des Zylinderteils 21 eine Stirnfläche 46, die einer Mutter 47 zugewandt ist, die auf dem Ringkolben 31 verschraubbar ist. Die Mutter 47 ist verbunden mit einem axialen, zylindrischen Fortsatz 48, der als Schutzhülse über die Federanordnung 43 und die Konushülse 8 hinweggreift und am Ende, nahe der Stirnfläche des Walzenrings 5, einen Dichtungsring 49 trägt. Die Schutzhülse 48 ist einstückig mit der Mutter 47 dargestellt; sie kann aber auch ein gesonderter, gegenüber der Mutter und/oder dem linken Ende des Zylinderteils abgedichteter Teil sein. Die Manschette 45 kann gegebenenfalls entfallen, wenn die Schutzwirkung der Schutzhülse 48 ausreicht.

Ausserhalb der Schutzhülse 48 ist eine Schubhülse 50 vorgesehen, die mit der Schutzhülse 48 über Bajonettvorsprünge 53, 54, 55 zusammenwirkt, die diese beiden Teile axial gegeneinander sichern. Die Schubhülse 50 überragt in dieser Stellung das Ende der Schutzhülse 48 und die Dichtung 49.

Bei der Montage eines Walzenrings 5 werden zunächst die erläuterten Teile in der beschriebenen und in der Zeichnung dargestellten Anordnung auf die Welle 1 aufgebracht. Dann wird die Mutter 47 so weit nach rechts verschraubt, bis die Schubhülse 50 den Walzenring 5 in feste Anlage an dem Stützring 4 geschoben hat. Nun wird der Zylinderraum 40 mit Druckmedium beaufschlagt, wodurch der Zylinderteil 21, die Tellerfedern 43 und die Konushülse 8 nach rechts in der Zeichnung bewegt werden. Der Druck des Druckmediums wird so bemessen, dass dabei die Konushülse und die Tellerfedern eine vorbestimmte Vorspannung erhalten. Die Schubhülse 50 kann nun entfernt werden, da der Walzenring 5 durch die Konushülse 8 festgehalten ist. Unter Aufrechterhaltung des hydraulischen Drucks wird die Mutter 47 nach rechts verschraubt, bis sie sich an die Stirnfläche 46 des Zylinderteils 21 fest anlegt und damit den Zylinderteil, die Tellerfedern 43 und die Konushülse 8 in der zuvor hydraulisch herbeigeführten Stellung fixiert. Danach kann der hydraulische Druck gelöst werden. Die Länge der Schutzhülse 48 ist so bemessen, dass sich die Lippe des Dichtungsrings 49 in dieser Stellung an den Walzenring dichtend anlegt.

Zur Demontage wird zunächst die Mutter 47, gegebenenfalls nachdem sie zuvor durch Druckbeaufschlagung des Zylinderraums 37 entlastet wurde, zurückgeschraubt und der Zylinderraum 22 mit hydraulischem Druck beaufschlagt, so dass der Zylinderteil 21 nach links in der Zeichnung verschoben wird. Dabei nimmt er durch die Mitnehmer 28, die mit dem inneren Vorsprung 15 zusammenwirken, die Konushülse 8 mit. Sobald dies geschehen ist, kann nach Entfernung der Mutter 47 der Walzenring 5 von der Anordnung abgenommen und gegen einen neuen Walzenring ausgetauscht werden. Die Konushülse 8, der Zylinderteil 21 und der Ringkolben 31 sowie die Federanordnung 43 können dabei an Ort und Stelle verbleiben. Während der Demontage und Montage ist die empfindliche Federanordnung durch die Manschette 45 vor Verschmutzung geschützt.

Während des Betriebs sind die Walzenwelle, die unter der Einwirkung der in den Lagern entwickelten Wärme steht, und der Walzenring 5, der periodisch von den zu walzenden, heissen Knüppeln beaufschlagt ist, unterschiedlichen Wärmeeinflüssen ausgesetzt, die bei diesen Teilen sowie bei den dazwischen angeordneten Elementen zu unterschiedlichen axialen Dehnungen führen. Im Ruhezustand herrschen wieder andere Temperaturen und Dehnungsverhältnisse. Diese können zwar zu einer Änderung der Einspannlänge der Tellerfedern 43 und damit auch zu Unterschieden in der von der Feder auf die Konushülse 8 ausgeübten Federkraft führen. Jedoch ist die Feder so bemessen, dass diese Federkraftunterschiede weit geringer sind als die zwischen der Konushülse 8 und dem Konus 7 der Walzenwelle herrschenden Reibkräfte, so dass dadurch keine Relativbewegungen hervorgerufen werden können.

Die Kraft der Feder 43 ist so bemessen, dass sich zwischen dem Konus 7, der Konushülse 8 und dem Walzenring 5 Reibungsverhältnisse ergeben, die mit mehrfacher Sicherheit zur Übertragung des im Walzvorgang auftretenden Drehmoments ausreichen. Überraschenderweise hat sich gezeigt, dass in der erfindungsgemässen Anordnung der Walzenring nicht zum Wandern in Umfangsrichtung gegenüber der Walzenwelle neigt, während in der bisher meist üblichen Anordnung mit starrer Konusverspannung, bei der ein Konuswinkel unterhalb des Selbsthemmungswinkels angewendet wird, ein Wandern selbst mit wesentlich stärkerer radialer Verspannung kaum verhindert werden kann.

## Patentansprüche

1. Anordnung zum Befestigen eines Walzenrings (5) auf einer fliegend gelagerten Walzenwelle (1) mittels einer im wesentlichen das gesamte Drehmoment übertragenden Konushülse (8), die von einer Feder (43) axial belastet ist, die von einem Widerlager (47) abgestützt ist, gekennzeichnet durch die Kombination der folgenden Merkmale:
   a) radial innerhalb der Feder (43) ist ein Zylinderteil (21) angeordnet, der mit der Walzenwelle (1) zwei axial gegensinnig wirkende Ringzylinderräume (22, 40) mit gesonderten Hydraulikanschlüssen (26, 41) bildet;
   b) der Zylinderteil (21) weist einen axial zwischen der Feder (43) und dem Widerlager (47) angeordneten Flansch (56) auf;
   c) eine zum freien Ende der Walzenwelle weisende Anschlagfläche (57) ist mit dem Zylinderteil (21) und eine damit zusammenwirkende, gegensinnige Anschlagfläche (57) ist mit der Konushülse (8) verbunden.

2. Anordnung nach Anspruch 1, dadurch gekennzeichnet, dass die grössten Aussendurchmesser der Konushülse (8), der Feder (43) und des Zylinderteils (21), soweit diese auf der freien Seite des Walzenrings (5) liegen, nicht grösser als der kleinste Innendurchmesser des Walzenrings sind.

3. Anordnung nach Anspruch 1 oder 2, dadurch gekennzeichnet, dass der Zylinderteil (21) zwei koaxiale Bohrungen (37, 20) aufweist, von denen die grössere (37) einen auf der Walzenwelle (1, 30) fest angeordneten Ringkolben (31) dicht einschliesst, während die kleinere (20) auf der der Feder (43) zugewandten Seite des Ringkolbens (31) gegenüber der Walzenwelle (1, 18) abgedichtet ist und dass eine auf dem freien Ende der Walzenwelle (1) bzw. auf dem Ringkolben (31) verschraubbare Mutter (47) als Widerlager zum Fixieren des Zylinderteils (21) in dessen Spannstellung vorgesehen ist.

4. Anordnung nach Anspruch 3, dadurch gekennzeichnet, dass der Zylinderteil (21) auf der dem Ringkolben (31) abgewandten Seite seiner kleineren Bohrung (20) eine weitere, gegenüber einem verdickten Teil (17) der Walzenwelle (1) abgedichtete Bohrung (19) zur Bildung des zweiten Ringzylinderraums (22) aufweist.

5. Anordnung nach einem der Ansprüche 1 bis 4, dadurch gekennzeichnet, dass die Feder (43) und die diese einschliessenden Teile der Konushülse (8) und des Zylinderteils (21) von einer sie vor Verschmutzung schützenden Manschette (45) umgeben sind, deren Durchmesser geringer ist als der Innendurchmesser des Walzenrings (5).

6. Anordnung nach einem der Ansprüche 1 bis 5, dadurch gekennzeichnet, dass die Feder (43) und die daran angrenzenden Teile der Konushülse (8) und des Zylinderteils (21) von einer Schutzhülse (48) umgeben sind, die am Walzenring (5) abgedichtet und dicht mit dem als Mutter (47) ausgebildeten Widerlager verbunden ist.

7. Anordnung nach Anspruch 6, dadurch gekennzeichnet, dass die Schutzhülse (48) einstückig mit der Mutter (47) verbunden ist.

8. Anordnung nach einem der Ansprüche 1 bis 7, dadurch gekennzeichnet, dass das als Mutter (47) ausgebildete Widerlager mit einer Schubhülse (50) axial fest verbindbar ist, die die Schutzhülse (48) überragt, zum Anschieben des Walzenrings (5) gegen einen seine vorgesehene Position bestimmenden Stützring (4).

**Claims**

1. An assembly for securing a roller ring (5) on a overhung mounted roller shaft (1) by means of tapered sleeve (8) which transmits substantially all the torque and which is loaded axially by a spring (43) supported by an abutment (47), characterised by a combination of the following features:
   a) radially inside the spring (43) there is arranged a cylindrical part (21) which, with the roller shaft (1), forms two annular cylinder chambers (22, 40) acting axially in opposite directions and with separate hydraulic connections (26, 41);
   b) the cylindrical part (21) has a flange (56) arranged axially between the spring (43) and the abutment (47);
   c) a stop surface (57) facing towards the free end of the roller shaft is connected to the cylindrical part (21) and an opposing stop surface (57) cooperating therewith is connected to the tapered sleeve (8).

2. An assembly according to Claim 1, characterised in that the the maximum external diameters of the tapered sleeve (8), of the spring (43) and of the cylindrical part (21), insofar as they lie on the free side of the roller ring (5), are not larger than the minimum internal diameter of the roller ring.

3. An assembly according to Claim 1 or 2, characterised in that the cylindrical part (21) has two coaxial bores (37, 20), of which the larger (37) tightly surrounds an annular piston (31) securely mounted on the roller shaft (1, 30), whereas the smaller bore (20) is sealed relative to the roller shaft (1, 18) on the side of the annular piston (31) nearest the spring (43), and in that a nut (47), which can be screwed on to the free end of the roller shaft (1) or on to the annular piston (31) is provided as an abutment for locating the cylindrical part (21) in its tightened position.

4. An assembly according to Claim 3, characterised in that on the side of its smaller bore (20) remote from the annular piston (31) the cylindrical part (21) has another bore (19) sealed relative to the thickened portion (17) of the roller shaft (1) so as to form the second annular cylindrical chamber (22).

5. An assembly according to any of Claims 1 to 4, characterised in that the spring (43) and the parts of the tapered sleeve (8) and cylindrical part (21) enclosing it are surrounded by a sleeve (45) which protects them from contamination and the diameter of which is smaller than the internal diameter of the roller ring (5).

6. An assembly according to any of Claims 1 to 5, characterised in that the spring (43) and the adjacent parts of the tapered sleeve (8) and of the cylindrical part (21) are surrounded by a protective sleeve (48) which is sealed against the roller ring (5) and is tightly connected to the abutment in the form of a nut (47).

7. An assembly according to Claim 6, characterised in that the protective sleeve (48) is joined integrally with the nut (47).

8. An assembly according to any of Claims 1 to 7, characterised in that the abutment, in the form of a nut (47), can be axially securely connected to a thrust sleeve (50) which overlaps the protective sleeve (48) so as to urge the roller ring (5) against a support ring (4) defining its predetermined position.

**Revendications**

1. Dispositif de fixation d'un anneau de cylindre (5) sur un arbre de cylindre (1) monté en porte à faux au moyen d'un manchon conique (8) transmettant essentiellement le couple total et qui est sollicité axialement par un ressort (43) soutenu par un contre-appui (47), caractérisé par la combinaison des particularités suivantes:
   a) il est prévu radialement à l'intérieur du ressort (43) une pièce cylindrique (21) qui forme avec l'arbre de cylindre (1) deux volumes cylindriques annulaires (22, 40) agissant axialement en sens inverses et pourvus de raccords hydrauliques particuliers (26, 41);
   b) la pièce cylindrique (21) comporte une collerette (56) disposée axialement entre le ressort (43) et le contre-appui (47);
   c) une surface de butée (57) dirigée vers l'extrémité libre de l'arbre de cylindre est reliée avec la pièce cylindrique (21), et une surface butée (57) coopérante et placée en sens inverse est reliée au manchon conique (8).

2. Dispositif selon la revendication 1, caractérisé en ce que les diamètres extérieurs maximaux du manchon conique (8), du ressort (43) et de la pièce cylindrique (21), pour autant que ceux-ci soient placés sur le côté libre de l'anneau de cylindre (5), ne sont pas supérieurs au diamètre intérieur minimal de l'anneau de cylindre.

3. Dispositif selon la revendication 1 ou 2, caractérisé en ce que la pièce cylindrique (21) comporte deux alésages coaxiaux (37, 20), dont le plus gros (37) entoure de façon étanche un piston annulaire (31) fixé sur l'arbre de cylindre (1, 30) tandis que le plus petit (20) est rendu étanche par rapport à l'arbre de cylindre (1, 18) sur le côté du piston annulaire (31) qui est tourné vers le ressort (43), et en ce qu'un écrou (47), pouvant être vissé sur l'extrémité libre de l'arbre de cylindre (1) ou sur le piston annulaire (31) est prévu comme contre-appui pour la fixation de la pièce cylindrique (21) dans sa position de blocage.

4. Dispositif selon la revendication 3, caractérisé en ce que la pièce cylindrique (21) comporte, sur le côté de son alésage plus petit (20) qui est opposé au piston annulaire (31), un autre alésage (19), rendu étanche par rapport à une partie surépaissie (17) de l'arbre de cylindre (1), pour former le second volume cylindrique annulaire (22).

5. Dispositif selon une des revendications 1 à 4, caractérisé en ce que le ressort (43) et les parties du manchon conique (8) et de la pièce cylindrique (21) entre lesquelles il est placé sont entourés par une manchette (45) les protégeant contre un encrassement et dont le diamètre est plus petit que le diamètre intérieur de l'anneau de cylindre (5).

6. Dispositif selon une des revendications 1 à 5, caractérisé en ce que la partie du manchon conique (8) et la partie de la pièce cylindrique (21) qui sont adjacentes au ressort (43) sont entourées par un manchon de protection (48), qui est monté de façon étanche sur l'anneau de cylindre (5) et qui est relié de façon étanche au contre-appui agencé comme un écrou (47).

7. Dispositif selon la revendication 6, caractérisé en ce que le manchon de protection (48) est relié de façon monobloc avec l'écrou (47).

8. Dispositif selon une des revendications 1 à 7, caractérisé en ce que le contre-appui agencé sous forme d'un écrou (47) peut être relié axialement rigidement avec un manchon de poussée (50), qui dépasse du manchon de protection (48), en vue d'appliquer l'anneau de cylindre (5) contre un anneau d'appui (4) déterminant la position prévue pour lui.

0 125 452